(19) Europäisches Patentamt
European Patent Office
Office européen des brevets

(11) Publication number: **0 147 976**
**A1**

(12) **EUROPEAN PATENT APPLICATION**

(21) Application number: 84308622.4

(22) Date of filing: 12.12.84

(51) Int. Cl.[4]: A 01 N 37/02
A 01 N 33/04, B 27 K 3/36
C 07 C 87/127, C 07 C 53/126
C 07 C 53/128, C 07 C 53/134

(30) Priority: 13.12.83 GB 8333228

(43) Date of publication of application: 10.07.85 Bulletin 85/28

(84) Designated Contracting States: AT BE CH DE FR GB IT LI LU NL SE

(71) Applicant: Hickson's Timber Products Limited
Castleford
West Yorkshire WF10 2JT(GB)

(72) Inventor: Lewis, David Alan
20 The Village Thorp Arch
Wetherby West Yorksire(GB)

(72) Inventor: Waldie, Christopher
14 Hollingthorpe Grove
Hall Green Wakefield West Yorkshire(GB)

(74) Representative: Woodman, Derek et al,
FRANK B. DEHN & CO. Imperial House 15-19 Kingsway
London WC2B 6UZ(GB)

(54) **Biocidal amine salts.**

(57) We provide amine salts of the general formula

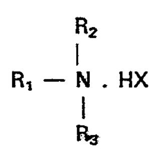

(I) .

[wherein $R_1$ represents an aliphatic hydrocarbyl group containing from 6 to 20 carbon atoms; $R_2$ represents an aliphatic hydrocarbyl group containing from 1 to 20 carbon atoms; $R_3$ represents a hydrogen atom or an alkyl group containing from 1 to 3 carbon atoms; and HX is selected from a range of organic acids], each of which possesses useful biocidal activity.

EP 0 147 976 A1

11D143-163

# Biocidal amine salts

This invention relates to new amine salts and to their use in non-aqueous biocidal compositions.

Light organic solvent preservatives (LOSP's) are of major importance in the wood preservation industry: LOSP systems generally contain a fungicide in a light organic solvent such as white spirit. They are particularly useful in the treatment of joinery components because, unlike water based systems, LOSP's do not cause the dimensional distortion of profiled timber and they integrate well with the factory production line processing common in large joinery manufacturers. Currently used fungicides in LOSP formulations are coming under increasing technical, economic and environmental pressures and therefore there is a pressing need to develop alternative fungicides for use in such formulations.

For water-borne use, water-soluble alkyl ammonium compounds have attracted much attention. Water-soluble amine salts and water-soluble quaternary ammonium salts have both been described as antifungals but water-soluble quaternary ammonium salts have generally proved preferable to water-soluble amine salts for water-borne use. However, for the reasons stated above, water-borne formulations are not universally applicable and there is a continuing need for new organic solvent borne formulations.

U.S. Patent Specification 3565927 describes a class of microbiocidally active quaternary ammonium compounds which are soluble in organic solvents and are derived from quaternary ammonium compounds wherein there is at least one $C_{8-22}$ alkyl group attached to the quaternary nitrogen and an anion derived from a branched chain aliphatic acid containing at least seven carbon atoms.

We have now found that certain amine salts

soluble in organic solvents have improved biocidal properties as compared with analogous quaternary ammonium salts. Furthermore, the amine salts in question are considerably easier to prepare than analogous quaternary ammonium salts.

According to one feature of the present invention there are provided amine salts of the general formula

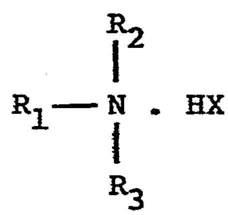

(I)

[wherein $R_1$ represents an aliphatic hydrocarbyl group containing from 6 to 20 carbon atoms; $R_2$ represents an aliphatic hydrocarbyl group containing from 1 to 20 carbon atoms; $R_3$ represents a hydrogen atom or an alkyl group containing from 1 to 3 carbon atoms; and

HX represents an acid of formula

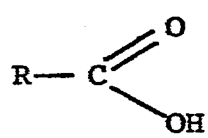

(II)

(in which R represents a straight chain or branched alkyl group containing from 5 to 20 carbon atoms), or

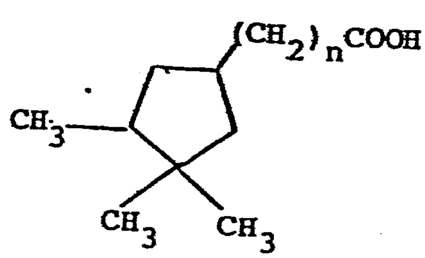

(III)

(in which n is from 1 to 5)].

The aliphatic hydrocarbyl groups referred to above may be saturated or unsaturated but will preferably be alkyl groups.

Thus, for example, the present invention includes within its scope amine salts of the general formula

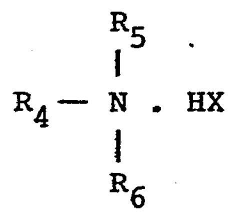

(Ia)

(in which $R_4$ represents an alkyl group containing from 8 to 20 carbon atoms; $R_5$ represents an alkyl group containing from 1 to 20 carbon atoms; $R_6$ represents a hydrogen atom or an alkyl group containing from 1 to 3 carbon atoms;
and HX is as hereinbefore defined).

According to a further feature of the present invention there are provided biocidal compositions comprising an organic solvent and, as active ingredient, at least one amine salt of formula I as hereinbefore defined.

The compositions according to the invention are particularly useful as antifungal agents but may also be useful in combatting algae, bacteria and certain wood-destroying insects.

An advantage of the compositions of the present invention is that they enable the use of antifungal compositions based on metal salts (which can be environmentally disadvantageous and which may have undesirable colour characteristics for particular applications) to be avoided.

The active ingredient of the compositions of the invention may consist of a single salt but will often consist of a mixture of salts. Thus, the active ingredient may consist of a mixture of salts formed between a single acid and a blend of amines; or may consist of a mixture of salts formed between a single amine and a blend of acids; or may consist of a mixture of salts formed between

a blend of amines and a blend of acids.

The acid component of amine salts according to the invention is selected so as to render the salt soluble in the organic solvent employed.

Acids of formula II include aliphatic monocarboxylic acids derivable from mineral, vegetable or animal sources such as, for example, straight chain carboxylic acids of formula II in which R contains from 6 to 20, preferably 11 to 20, carbon atoms, e.g. lauric acid, palmitic acid and stearic acid.

Formula II also includes primary and secondary saturated acyclic carboxylic acids obtainable synthetically from olefins, for example by the "oxo" process. For reasons of commercial availability, such acids will generally be mixtures of isomeric and homologous primary and secondary saturated acyclic carboxylic acids, a major proportion of which contain branched chains. In general, the primary acids will be of the formula

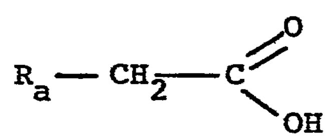

(IV)

where $R_a$ represents an alkyl group containing from 4 to 18 carbon atoms.

The secondary acids will in general be of the formula

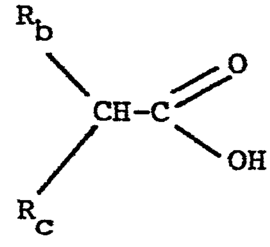

(V)

where $R_b$ and $R_c$, which may be the same or different, each represents an alkyl group, the groups $R_b$ and

$R_c$ containing in total from 4 to 18 carbon atoms.

In formula V, $R_b$ and $R_c$ may, for example, be individually selected from methyl, ethyl, n-propyl, isopropyl, n-butyl, isobutyl, sec-butyl, t-butyl, n-pentyl, isopentyl and neo-pentyl groups.

An example of a primary acyclic carboxylic acid is 3,5,5-trimethylhexanoic acid.

A preferred acid for use in the present invention is that which is industrially available as "isononanoic acid" (produced by Hoechst) which is a mixture of $C_9$ acids containing a major proportion of 3,5,5-trimethylhexanoic acid.

Formula II further includes tertiary saturated acyclic acids. Such acids can be represented by the general formula

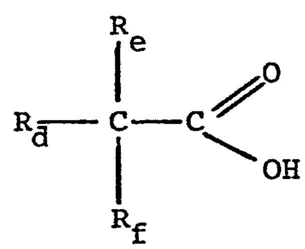

(VI)

in which $R_d$, $R_e$ and $R_f$, which may the same or different, each represents an alkyl group. The tertiary acids will preferably contain a total of from 7 to 18 carbon atoms, i.e. $R_d$,$R_e$ and $R_f$ will in total contain from 5 to 16 carbon atoms. $R_d$, $R_e$ and $R_f$ may, for example, be independently selected from methyl, ethyl, n-propyl, isopropyl, n-butyl, isobutyl, t-butyl, n-pentyl or n-hexyl groups. Examples of tertiary acids include 2-ethyl-2-methylhexanoic acid and 4-ethyl-2,2-dimethyloctanoic acid.

Tertiary acids are obtainable synthetically from olefins, for example by the "Koch" process. The composition of the acids produced by the "Koch" process depends upon the composition of the olefin starting material; the product will normally be a mixture of isomeric and homologous tertiary acids.

Typical industrial products, preferred for use in the present invention, include the Versatics (produced by Shell Chemicals): for example Versatic 10 which is a mixture of isomeric tertiary acids of the above formula in which $R_d$, $R_e$ and $R_f$ together contain about 8 carbon atoms; and Versatic 911, in which $R_d$, $R_e$ and $R_f$ together contain from 7 to 9 carbon atoms.

Acids of formula III are the major components of naphthenic acids, derived from petroleum. They occur naturally in crude oil and are prepared by alkali washing of certain petroleum fractions.

In formula I, $R_2$ and $R_3$ preferably each represents a methyl group. More preferably, in compositions according to the invention the active ingredient will be derived from a blend of amines the major proportion of which is a blend of amines of formulae

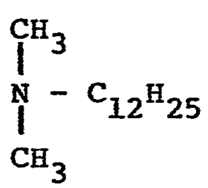

and

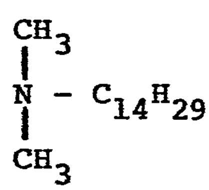

Such amines are commercially available, examples being ADMA 246 (Ethyl Corporation) and Armeen DMMCD (Akzo Chemie).

Suitable solvents for use in the compositions of the present invention include hydrocarbon solvents such as petroleum-derived and coal-derived solvents, for example white spirit, paraffin, gas oil, xylene and naphtha. Other solvents which may be employed include chlorinated hydrocarbons, for example methylene dichloride. In general, the solvent will be chosen so as to have a boiling point within the range 140-270°C. Solvents with lower boiling points may have too low a flashpoint. Solvents with higher boiling points may have too slow a drying rate.

However, liquefied hydrocarbon gases, e.g. butane, are alternative solvents which may be used.

If desired, the compositions according to the invention may be emulsified in water.

The compositions according to the invention may if desired contain additional ingredients, for example water-repellants (e.g. paraffin wax, hydrocarbon resins, long-chain fatty acid esters such as lauryl stearate), resins serving to improve compatibility with paint (for example alkyd resins), unsaturated oils (e.g. linseed oils) and other fungicides and/or insecticides, for example pentachlorophenol, bis (tri-n-butyltin) oxide, lindane, dieldrin and synthetic pyrethroids.

The compositions according to the invention have particular applicability in wood treatment, for example as wood preservatives, but their use is not limited to wood preservation and they may also be used to protect other types of cellulosic material for example hessian, cotton, rope and cordage.

Accordingly, a further feature of the present invention provides a method of protecting a cellulosic material from biological degradation which comprises treating the said material with a composition according to the invention as hereinbefore described.

For the treatment of wood, the compositions according to the invention may be applied by any known method, for example dipping, spraying, deluging, brushing and techniques involving vacuum and/or pressure impregnation.

Where the material to be treated is other than wood, the compositions according to the invention may be employed by any of the known methods for treating such materials.

The compositions according to the invention will advantageously contain from 0.1 to 10% by

weight, preferably 0.5 to 5% by weight, of amine salt.

The amine salts used in the compositions according to the invention may be prepared by conventional techniques.

Thus, for example, amine salts may be prepared by direct reaction of the appropriate amine with the appropriate acid in stoichiometric amounts. The reaction can if desired be carried out prior to formulation of the preservative composition. In this case the calculated weights of acid and amine are first mixed together in a suitable vessel. If the reactants are solids at normal temperatures then they will require heating until molten to facilitate mixing. The temperature of the reaction mixture rises during mixing but not sufficiently to require special precautions. When mixing is complete the acid and amine will have all reacted to produce the salt which requires no further processing prior to adding to the other components of the preservative composition. The amine salt thus prepared may be used immediately or safely stored at room temperatures for long periods prior to use without any danger of deterioration.

Alternatively, since both starting materials (i.e. amine and acid) will be soluble in the organic solvent used in the preservative composition, the amine salts may if desired be formed *in situ* by adding the appropriate amine and acid in the required proportions to the said solvent together with any other ingredients of the compositions.

The following examples illustrate the preparation of amine salts of formula I and demonstrate their antifungal properties:

Example 1

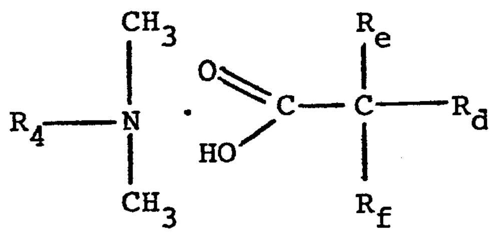

The following two materials were reacted together:

a) ADMA 246 (alkyl dimethyl amine in which the alkyl group $R_4$ is a mixture of 40% $C_{12}H_{25}$, 50% $C_{14}H_{29}$ and 10% $C_{10}H_{21}$ and $C_{16}H_{33}$ having a combining weight of 234.3; obtainable from Ethyl Corporation).

b) Versatic 10 (an acid which is a synthetic product composed of a mixture of branched isomers of $C_{10}$ monocarboxylic acids mainly tertiary in nature having a combining weight of 175.3g; obtainable from Shell Chemicals).

Method:

To 234.3g of the above amine (a) was added 175.3g of the acid (b) in a vessel fited with mechanical stirring. The temperature of the mixture was found to rise by about 30°C during the addition of the acid. Stirring was continued until the temperature was seen to fall which was taken as an indication that reaction was complete. The result was a clear viscous amber coloured liquid with a mild odour. It was found to be readily soluble in hydrocarbon solvents but insoluble in water.

Example 2

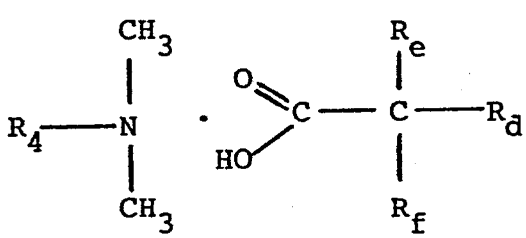

The following two materials were reacted together:

c) ARMEEN DMMCD (Alkyl dimethyl amine in which the alkyl group $R_4$ is a mixture of 67% $C_{12}H_{25}$, 28% $C_{14}H_{29}$, 1% $C_{10}H_{21}$ and 4% $C_{16}H_{33}$ having an average combining weight of 230; obtainable from Akzo Chemie).

d) Versatic 10 as described in Example 1.

Method

To 230g of the above amine (c) was added 175.3g of the acid (d) in a vessel as described in Example 1. A temperture rise of about 30°C was noted during the addition. The result was a clear amber coloured viscous liquid with a mild odour. It was found to be readily soluble in hydrocarbon solvents but insoluble in water.

Example 3

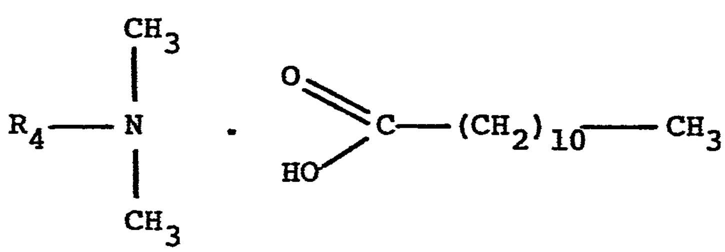

234.3g of the alkyl dimethyl amine (a) described in Example 1 was reacted with 200.3g of pure lauric acid. The acid was added to the amine as in Example 1 but this time the acid required heating prior to addition because it has a melting point above room temperature. Once again reaction was accompanied by the evolution of heat and the result was a clear amber liquid which became a pastey solid on cooling to room temperature. It was found to be readily soluble in hydrocarbon solvents but insoluble in water.

The above Examples 1, 2 and 3 demonstrate the ease with which hydrocarbon solvent soluble amine salts can be prepared. The ease of manufacture offers considerable advantages compared with the preparation of oil soluble salts of quaternary ammonium compounds. Since these latter compounds are obtained by necessity in the form of either their hydroxides, halogen salts or other water soluble salts in aqueous solution, considerable processing is required to obtain them in the form of their anhydrous oil soluble salts. This processing would for example require the mixing of an aqueous solution of the quaternary ammonium salt with an aqueous solution of a suitable acid in the form of a water soluble salt. Next the water insoluble quaternary ammonium salt formed would have to be separated from the water possibly by solvent extraction followed by removal of the solvent and any remaining water. Compared with the preparation of amine salts, the production of quaternary ammonium salts involves considerable time and expense and would also require sophisticated manufacturing facilities.

Example 4

The amine salt prepared in Example 1 was formulated into an antifungal composition by dissolving 0.5% by weight in white spirit.
The products of Examples 2 and 3 were formulated into antifungal compositions in analogous manner.

Example 5

Influence of carboxylic acids on tertiary amine activity

Agar Inhibition Concentration (AIC) tests were conducted in order to define any potential benefits arising from forming a tertiary amine salt for use in an organic solvent as opposed to

using the free tertiary amine. The results given below in Table 1 are for the prevention of growth of Chaetomium globosum wood destroying fungus. The test method used involves mixing a known concentration of active ingredient, contained in a known volume of suitable organic solvent, with a predetermined volume of malt agar. The agar is poured into sterile petri dishes and, after setting, it is seeded with a freshly prepared spore suspension of Chaetomium globosum. The plates are then incubated for three days at +24°C, after which time they are examined for indications of fungal growth.

TABLE 1

| Chemical | Threshold (ppm) |
|---|---|
| Acid only | |
| Versatic acid 10 | 96-112 |
| Tertiary Amine only | |
| Adma 246 | 80-96 |
| Armeen DMMCD | 80-96 |
| Tertiary Amine carboxylate | |
| Adma 246 versatate | 48-64 |
| Armeen DMMCD versatate | 64-80 |

The results in Table 1 suggest that there is an advantage to be gained in using amine salt in place of a free amine for LOSP formulations.

Example 6

Fungicidal activity of selected amine carboxylates

Agar Inhibition Concentration tests were conducted in order to establish the influence of

the anion on the fungicidal activity of the formed amine salt. The results are shown in Table 2.

TABLE 2

| Tertiary Amine Carboxylates | Threshold (ppm) |
|---|---|
| Adma 246 versatate | 64-80 |
| Adma 246 naphthenate | 112-128 |
| Armeen DMMCD Isononanoate | 96-112 |
| Armeen DMMCD Decanoate | 112-128 |
| Armeen DMMCD Laurate | 112-128 |
| Armeen DMMCD Neoisoate (1:2) | 112-128 |
| Armeen DMMCD Neoisoate (2:1) | >128 |
| Armeen DMMCD Naphthenate | >128 |
| Armeen DMMCD Octanoate | >128 |

The neoisoate salts in Table 2 are formed from mixtures of versatic and isononanoic acids in the ratios indicated.

Example 7

Effect of the cation on fungicidal activity

Agar Inhibition Concentration tests were conducted in order to compare the performance of selected amine carboxylates against selected quaternary ammonium carboxylates. The results are shown in Table 3. Adma 246, Armeen DMMCD and DAMA 10 are tertiary amines. The benzalkonium and Bardac 2050 salts are quaternary ammonium salts.

TABLE 3

| Carboxylic Salt | Threshold (ppm) |
|---|---|
| Adma 246 versatate | 64-80 |
| Benzalkonium versatate | 80-96 |
| Bardac 2050 versatate | 112-128 |
| DAMA 10 versatate | 64-128* |
| Armeen DMMCD Isononanoate | 96-112 |
| Benzalkonium Isononanoate | 112-128 |
| Bardac 2050 Isononanoate | > 128 |
| DAMA 10 Isononanoate | 80-128* |

* isolated fungal growth through this range to maximum concentrations tested.

Table 3 demonstrates that the tertiary amine salts tested appear to have a greater fungicidal activity than the corresponding quaternary amine salts.

Example 8

Wood block screening tests

Selected amine carboxylates were formulated into antifungal compositions. The oil soluble carboxylic acid salts previously described were tested in organic solvents against a wood destroying fungus, brown-rot type Basidiomycete *Coniophora puteana* FPRL 11E. Two sets of pine sapwood specimens were treated with one or other of the selected active ingredients in organic solvent: one set of specimens was exposed to the fungus in an unweathered (unleached) condition whilst the second set was exposed only after being subjected to a two weeks period of cold water leaching. Toxic thresholds

from these tests, based on weight change determinations, are shown in Table 4.

The results in Table 4 demonstrate that amine salts according to the invention can have a high level of fungicidal activity against wood destroying fungi.

TABLE 4

Toxic thresholds of selected oil soluble amine carboxylate salts after exposure of treated pine sapwood specimens to *Coniophora puteana* FPRL 11E

| Tertiary Amine Carboxylates | Toxic Threshold ($kgm^{-3}$) | |
|---|---|---|
| | Unleached | Leached |
| Series 1 | | |
| Adma 246 versatate | < 2.21 | <2.26 |
| Adma 246 laurate | 3.17-4.64 | 4.65-6.76 |
| Series 2 | | |
| Armeen DMMCD versatate | 2.36-3.78 | 3.64-4.83 |
| Armeen DMMCD Neoisoate (2:1) | 3.80-5.15 | 3.78-5.11 |
| Armeen DMMCD Naphthenate | 3.84-4.79 | >5.19 |
| Armeen DMMCD Isononanoate | 2.20-3.12 | > 3.99 |
| Armeen DMMCD Laurate | >4.35 | >4.54 |
| Armeen DMMCD Neoisoate (1:2) | >3.96 | >4.18 |

Note:
Series 1 - active ingredient dissolved in white spirit
Series 2 - active ingredient dissolved in acetone.

Example 9

Physical Permanence

In order to demonstrate the resistance of the amine salts described to removal by natural weathering from wood impregnated with solutions containing them, the following experiment was conducted:

Pinus sylvestris stakes 20mm x 20mm x 380mm containing majority sapwood were treated with solutions in white spirit of:

a) Adma 246 versatate prepared as described in Example 1.

b) Adma 246 laurate prepared as in Example 3.

c) Adma 246 naphthenate prepared by the methods described.

Once the solvent had evaporated from the stakes a number were analysed for amine salt content. A further number were exposed to natural weathering out of doors for a period of 12 months before being analysed for amine salt content.

It was found that the exposed stakes treated with Adma 246 versatate contained an average 93.6% of the amount of amine salt found in the stakes analysed prior to exposure. This meant that only 6.4% of the salt was lost during 12 months exposure.

Similarly it was found that the stakes treated with Adma 246 laurate lost 21.3% of the salt and those treated with Adma 246 naphthenate lost 26.0%.

Claims:

1. Amine salts of the general formula

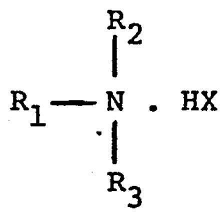

(I)

[wherein $R_1$ represents an aliphatic hydrocarbyl group containing from 6 to 20 carbon atoms; $R_2$ represents an aliphatic hydrocarbyl group containing from 1 to 20 carbon atoms; $R_3$ represents a hydrogen atom or an alkyl group containing from 1 to 3 carbon atoms; and
HX represents an acid of formula

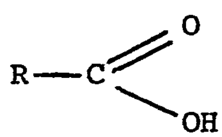

(II)

(in which R represents a straight chain or branched alkyl group containing from 5 to 20 carbon atoms), or

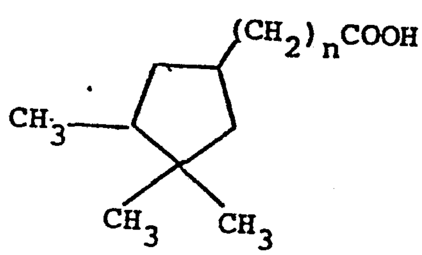

(III)

(in which n is from 1 to 5)].

2. Amine salts as claimed in claim 1 in which HX represents an acid of formula

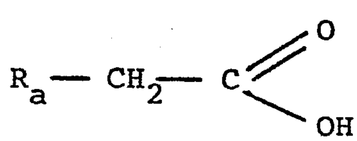

(IV)

(in which $R_a$ represents an alkyl group containing 4 to 18 carbon atoms),

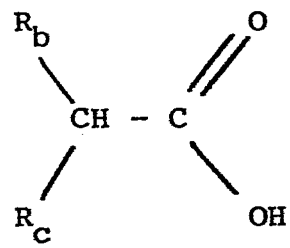

(V)

(in which $R_b$ and $R_c$, which may be the same or different, each represents an alkyl group, the groups $R_b$ and $R_c$ containing in total from 4 to 18 carbon atoms), or

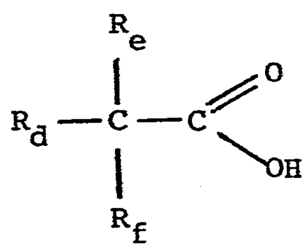

(VI)

(in which $R_d$, $R_e$ and $R_f$, which may be the same or different, each represents an alkyl group).

3. Amine salts as claimed in claim 1 or claim 2 wherein $R_1$ represents an alkyl group containing from 8 to 20 carbon atoms and $R_2$ represents an alkyl group containing 1 to 20 carbon atoms.

4. Amine salts as claimed in any one of the preceding claims wherein $R_2$ and $R_3$ each represents a methyl group.

5. Amine salts as claimed in claim 4 wherein $R_1$ represents a group of formula $C_{12}H_{25}$ or $C_{14}H_{29}$.

6. Amine salts as claimed in any one of the preceding claims wherein HX is 3,5,5-trimethylhexanoic acid or an acid of formula VI in which $R_d$, $R_e$ and $R_f$ together contain from 7 to 9 carbon atoms.

7. Biocidal compositions comprising an organic solvent and, as active ingredient, at least one

amine salt as claimed in any one of the preceding claims.

8. A method of protecting a cellulosic material from biological degradation which comprises treating the said material with a composition as claimed in claim 7.

9. A method as claimed in claim 8 wherein the cellulosic material is wood.

European Patent Office

# EUROPEAN SEARCH REPORT

0147976

Application number

EP 84 30 8622

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 893 825 (L.A. GOELLER) * Column 2, lines 7-51; column 3, lines 21-39 * --- | 1-3 | A 01 N 37/02<br>A 01 N 33/04<br>B 27 K 3/36<br>C 07 C 87/127<br>C 07 C 53/126<br>C 07 C 53/128<br>C 07 C 53/134 |
| X | EP-A-0 025 961 (HENKEL KOMMANDITGESELLSCHAFT) * Page 18, table 1, example 25; claim 1 * --- | 1-5 | |
| X | US-A-2 204 511 (A.W. RALSTON et al.) * Claims 1-3,5-7 * --- | 1-3,7 | |
| X | CHEMICAL ABSTRACTS, vol. 96, no. 1, 4th January 1982, page 185, no. 2032t, Columbus, Ohio, US; L.J: SHU et al.: "Comparison of several chemical pinching agents on greenhouse forcing azaleas, Rhododendron cv" & J. AM. SOC. HORTIC. SCI. 1981, 106(5), 557-561 * Abstract * --- | 1-5 | TECHNICAL FIELDS SEARCHED (Int. Cl.4)<br>C 07 C<br>A 01 N<br>B 27 K |
| X | US-A-4 155 872 (M. SHIGEHIRO et al.) * Column 3, lines 14-55 * --- | 1-5 | |
| A | DE-A-1 299 405 (VEB) * Column 2, line 30 - column 3, line 36; claims * --- -/- | 1-9 | |

The present search report has been drawn up for all claims

| Place of search | Date of completion of the search | Examiner |
|---|---|---|
| THE HAGUE | 21-03-1985 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

European Patent Office

# EUROPEAN SEARCH REPORT

0147976
number

EP 84 30 8622



## DOCUMENTS CONSIDERED TO BE RELEVANT

| Category | Citation of document with indication where appropriate of relevant passages | Relevant to claim | CLASSIFICATION OF THE APPLICATION (Int Cl 4) |
|---|---|---|---|
| D,A | US-A-3 565 927 (R.L. WAKEMAN et al.) * Whole document * | 1-9 | |
| A | DE-A-1 571 215 (DYNAMIT NOBEL) * Page 1, line 11 - page 3, line 11 * | 1-6 | |

TECHNICAL FIELDS SEARCHED (Int. Cl.4)

The present search report has been drawn up for all claims

| Place of search | Date of completion of the search | Examiner |
|---|---|---|
| THE HAGUE | 21-03-1985 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82